# EUROPÄISCHE PATENTANMELDUNG

(11) **EP 1 854 655 A2**
(43) Veröffentlichungstag der Anmeldung: **14.11.2007**
(21) Anmeldenummer: 07007662.5
(22) Anmeldetag: 14.04.2007
(51) Int. Cl.: B60K 37/00, B60R 13/02

(54) **Tunnelverkleidung für ein Kraftfahrzeug**

(30) Priorität: 09.05.2006 DE 102006021462
(71) Anmelder: Bayerische Motoren Werke Aktiengesellschaft, 80809 München (DE)
(72) Erfinder: Schmid, Bernhard, 85737 Ismaning (DE)

(57) **Zusammenfassung**

Es ist eine Tunnelverkleidung für ein Kraftfahrzeug mit einer Stützstruktur bekannt, in der wenigstens ein Aufnahmeraum vorgesehen ist, und die wenigstens eine in etwa vertikal ausgerichtete Längswand aufweist. An der einstückig ausgeführten Stützstruktur ist wenigstens ein, der Längswand der Stützstruktur zugeordnetes Seitenwandelement angebracht, das wenigstens abschnittsweise zusammen mit der Seitenwand einen oder mehrere Hohlräume begrenzt. Aufgabe der Erfindung ist es, die bekannte Tunnelverkleidung für ein Kraftfahrzeug zu verbessern.

Erfindungsgemäß besteht eine Tunnelverkleidung (1) für ein Kraftfahrzeug in Modulbauweise zumindest aus einem Basismodul (3) und zumindest einem Bedienmodul (4), das zumindest ein Bedienelement (7, 8) aufweist. Das Basismodul (3) ist an den Tunnel (2) anbindbar, und das Bedienmodul (4) ist mit dem Basismodul (3) verbindbar. Das Basismodul (3) enthält bevorzugt eine Stützstruktur, sodass die Tunnelverkleidung (1) eine hohe Festigkeit und Steifigkeit aufweist. Dadurch entsteht ein hochwertiger Qualitätseindruck. Zudem kann das Basismodul (3) bevorzugt zugleich als Luftkanal dienen, durch den Luft in Fahrzeuglängsrichtung hindurchströmen kann.

## Beschreibung

Die Erfindung betrifft eine Tunnelverkleidung für ein Kraftfahrzeug nach dem Oberbegriff des Patentanspruchs 1.

Aus der DE 198 26 943 A1 ist eine Tunnelverkleidung für ein Kraftfahrzeug mit einer Stützstruktur bekannt, in der wenigstens ein Aufnahmeraum vorgesehen ist, und die wenigstens eine in etwa vertikal ausgerichtete Längswand aufweist. An der einstückig ausgeführten Stützstruktur ist wenigstens ein, der Längswand der Stützstruktur zugeordnetes Seitenwandelement angebracht, das wenigstens abschnittsweise zusammen mit der Seitenwand einen oder mehrere Hohlräume begrenzt. Auf diese Weise ergibt sich wenigstens ein Hohlraum zwischen der Stützstruktur und dem Seitenwandelement, der als ein gut in Fahrzeuglängsrichtung durchströmbarer Luftkanal dient.

Aufgabe der Erfindung ist es, die bekannte Tunnelverkleidung für ein Kraftfahrzeug zu verbessern.

Diese Aufgabe wird mit einer Tunnelverkleidung für ein Kraftfahrzeug mit den Merkmalen des Patentanspruchs 1 gelöst.

Erfindungsgemäß besteht eine Tunnelverkleidung für ein Kraftfahrzeug in Modulbauweise zumindest aus einem Basismodul und zumindest einem Bedienmodul, das zumindest ein Bedienelement aufweist. Ein Bedienelement kann beispielsweise ein Schalter, ein Druckknopf, ein Handbremshebel, ein Schalthebel, oder ähnliches sein. Das Basismodul ist an den Tunnel anbindbar, und das Bedienmodul ist mit dem Basismodul verbindbar. Das Basismodul enthält bevorzugt eine Stützstruktur, sodass die Tunnelverkleidung eine hohe Festigkeit und Steifigkeit aufweist. Dadurch entsteht ein hochwertiger Qualitätseindruck.

Zudem kann das Basismodul bevorzugt zugleich als Luftkanal dienen, durch den Luft in Fahrzeuglängsrichtung hindurchströmen kann. Aufgrund dieser funktionalen Integration sind keine zusätzlichen Blasformteile mehr für einen Luftkanal notwendig. Vorteilhafterweise ist das Bedienmodul über einen elektrischen Steckkontakt mit der restlichen Fahrzeugelektrik und / oder -elektronik koppelbar.

Die erfindungsgemäße Tunnelverkleidung weist einen sehr hohen Integrationsgrad auf. Entsprechend wenige Bauteile sind zur Darstellung der Tunnelverkleidung erforderlich, sodass die Kosten gegenüber einer Tunnelverkleidung aus mehr Bauteilen reduziert sind. Die Tunnelverkleidung ist unterteilt in einfach zugängliche Module, die leicht montiert und demontiert werden können. Entsprechend gering ist der dafür erforderliche Zeitaufwand, sodass die Montage und Demontage entsprechend kostengünstig möglich ist.

Die Modulbauweise ermöglicht es, einzelne Module schnell und bequem wechseln zu können. So können auf dem Basismodul viele verschiedene Bedienmodule angebracht werden. Dies ermöglicht einen hohen Differenzierungsgrad für den Kunden. Auch ist eine Nachrüstung jederzeit möglich. In das Basismodul kann auch ein elektrisches Kabel des Kabelbaums integriert sein, sodass das Basismodul nicht nur mechanische, sondern auch elektrische und / oder elektronische Verbindungen zum Bedienmodul möglich sind.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine Explosionsdarstellung einer erfindungsgemäßen Tunnelverkleidung und
- Fig. 2: einen Schnitt durch die in Fig. 1 gezeigte Tunnelverkleidung.

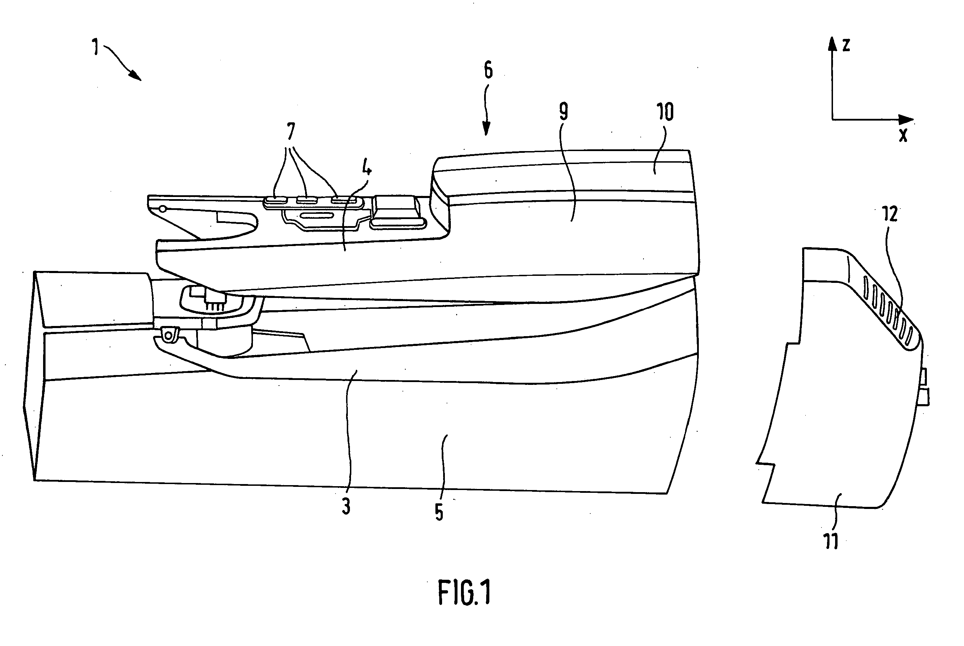

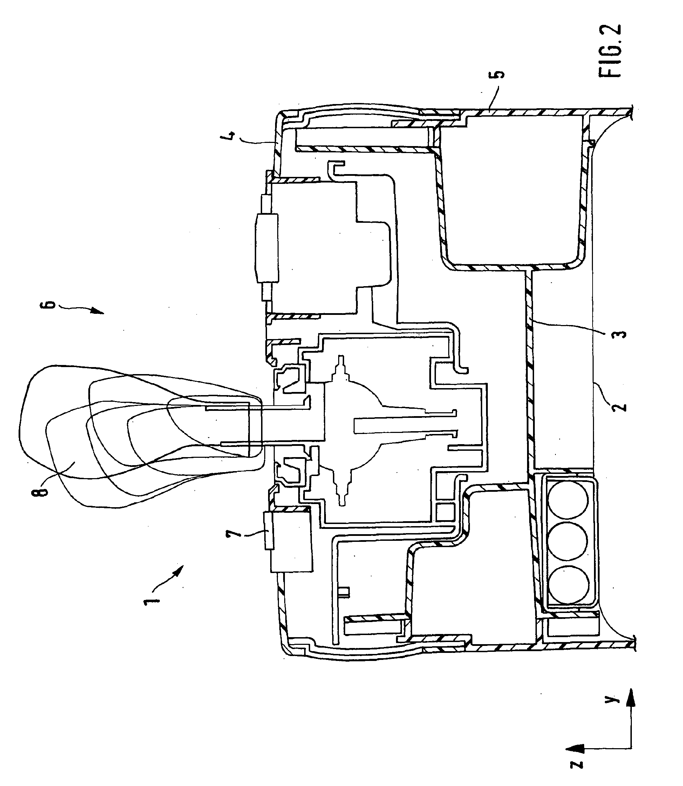

In Fig. 1 und Fig. 2 ist eine Tunnelverkleidung 1 gezeigt, die im Fahrzeuginnenraum auf einen Mitteltunnel 2 eines Kraftfahrzeugs aufgesetzt ist, der sich in Fahrzeuglängsrichtung durch den gesamten Fahrzeuginnenraum erstreckt. Die Tunnelverkleidung 1 schließt vorne an den unteren Bereich einer Instrumententafel an und erstreckt sich - in Fahrtrichtung gesehen - nach hinten bis in den Fondbereich des Fahrzeuginnenraums. Die Tunnelverkleidung 1 besteht in Modulbauweise aus einem Basismodul 3 und einem Bedienmodul 4. Bei der Montage wird das Basismodul 3 mit dem Tunnel verbunden, und das Bedienmodul 4 wird auf das Basismodul 3 aufgesetzt.

Das Basismodul 3 weist eine Stützstruktur aus einem Kunststoffspritzgussbauteil mit Versteifungsrippen auf, sodass die Tunnelverkleidung 1 eine hohe Festigkeit und Steifigkeit aufweist. Die Stützstruktur weist dabei eine Hauptentformrichtung in z-Richtung, also in der Höhenerstreckung der Tunnelverkleidung 1, und mindestens eine Nebenentformrichtung in y-Richtung, also zur Seite hin auf. Durch die zusätzliche Nebenentformung können in die Stützstruktur beidseitig jeweils ein Luftkanal und Anbindungspunkte für das Basismodul 3 an den Tunnel 2 integriert werden, ohne dass dafür separate Bauteile erforderlich sind. Den seitlichen Abschluss der Stützstruktur bildet beidseitig jeweils eine vertikale Seitenwand 5, welche in Sonderausführungen auch lösbar gestaltet sein kann.

Das Bedienmodul 4 erstreckt sich annähernd über die gesamte Oberseite 6 der Tunnelverkleidung 1. Es enthält alle Bedienelemente, die auf der Tunnelverkleidung 1 angeordnet sind. So weist das Bedienmodul 4 auf seiner Oberseite mehrere elektrische Schalter 7 und einen Wählhebel 8 für die Gangschaltung eines Automatikschaltgetriebes des Kraftfahrzeugs auf. Zudem ist in das Bedienmodul 4 ein Staufach 9 integriert, das mit einem klappbaren Deckel 10 verschließbar ist. Der klappbare Deckel 10 dient in seiner geschlossenen Stellung als Armauflage. Dazu weist der Deckel 10 auf seiner Oberseite eine Polsterung auf. Zudem kann das gesamte Staufach 9 zusammen mit dem Deckel 10 innerhalb des Bedienmoduls 4 höhenverstellbar geführt sein, sodass die Armauflage individuell für den Benutzer in eine ergonomisch optimale Stellung verlagerbar ist. Zudem könnte im hinteren Bereich des Bedienmoduls 4 ein Fondmonitor angebracht werden, der zur Unterhaltung der Passagiere im Fond während der Fahrt dient.

Das Bedienmodul 4 ist dabei nicht nur mechanisch mit dem Basismodul 3 verbunden, sondern über einen Steckkontakt auch elektrisch. Das Basismodul 3 wiederum ist mit der Fahrzeugelektrik und -elektronik verbunden. Auf diese Weise können die Bedienelemente 7 und 8 mit der Fahrzeugelektrik und -elektronik mit geringem Aufwand verbunden sein.

Der hintere Abschluss der Tunnelverkleidung 1 wird durch eine aufgesetzte Abschlussblende 11 gebildet. Sie stellt die optische Verbindung zwischen den einzelnen Modulen her. Auch kann in die Abschlussblende ein Luftauslass 12 für die Fondpassagiere integriert sein, der durch die in das Basismodul 3 der Tunnelverkleidung 1 integrierten Luftkanäle mit temperierter Frischluft versorgt wird.

Der Aufbau der Tunnelverkleidung 1 aus zumindest einem Basismodul 3 und einem Bedienmodul 4 ermöglicht es, dass mit relativ geringem Aufwand unterschiedliche Tunnelverkleidungen 1 darstellbar sind. Dazu können unterschiedliche Bedienmodule 4 zum Einsatz kommen, während stets das gleiche Basismodul 3 verwendet wird. Das optische Erscheinungsbild der Tunnelverkleidung wird hauptsachlich durch das Bedienmodul 4 bestimmt, während das gleiche Basismodul 3 kaum wahrgenommen wird. Auf diese Weise kann die Tunnelverkleidung 1 jedes Fahrzeugs durch unterschiedliche Bedienmodule 4 entsprechend den Wünschen der einzelnen Fahrzeugnutzer unterschiedlich gebaut werden. Auch kann das Bedienmodul 4 später leicht ausgewechselt werden, sodass Änderungen der ursprünglich einmal gebauten Konfiguration der Tunnelverkleidung 1 leicht möglich sind.

Die Fugen zwischen dem Bedienmodul 4 und den Bedienelementen 7 und 8 können direkt am Bedienmodul 4 eingestellt werden, sodass leicht ein optisch ansprechendes Fugenbild erreichbar ist. Beim Stand der Technik dagegen sind üblicherweise die Bedienelemente auf einem Grundträger der Tunnelverkleidung angebracht, der mit einer Sichtblende verkleidet wird, die ebenfalls am Grundträger befestigt wird. Die Bedienelemente ragen dabei durch Aussparungen in der Sichtblende hindurch. Das Einstellen der Sichtfugen zwischen den Bedienelementen und der Sichtblende ist hierbei nur indirekt möglich. Am erfindungsgemäßen Bedienmodul 4 dagegen können die Sichtfugen direkt eingestellt werden.

## Patentansprüche

1. Tunnelverkleidung (1) für einen Tunnel (2) im Fahrzeuginnenraum eines Kraftfahrzeugs, die in Modulbauweise zumindest ein Basismodul (3) und zumindest ein Bedienmodul (4) mit zumindest einem Bedienelement (7, 8) aufweist, wobei das Basismodul (3) an den Tunnel (2) anbindbar ist, und das Bedienmodul (4) mit dem Basismodul (3) verbindbar ist.

2. Tunnelverkleidung nach Anspruch 1, **dadurch gekennzeichnet, dass** das Basismodul (3) eine Stützstruktur enthält.

3. Tunnelverkleidung nach Anspruch 1 oder 2, **dadurch gekennzeichnet, dass** das Basismodul (3) zugleich als Luftkanal dient, durch den Luft in Fahrzeuglängsrichtung hindurchströmen kann.

4. Tunnelverkleidung nach einem der vorhergehenden Ansprüche, **dadurch gekennzeichnet, dass** das Bedienmodul (4) über einen elektrischen Steckkontakt mit der restlichen Fahrzeugelektrik und / oder -elektronik koppelbar ist.

5. Tunnelverkleidung nach einem der vorhergehenden Ansprüche, **dadurch gekennzeichnet, dass** unterschiedliche Bedienmodule (4) mit dem Basismodul (3) verbindbar sind.

6. Tunnelverkleidung nach einem der vorhergehenden Ansprüche, **dadurch gekennzeichnet, dass** in das Bedienmodul (4) eine Armauflage integriert ist.

7. Tunnelverkleidung nach einem der vorhergehenden Ansprüche, **dadurch gekennzeichnet, dass** in das Bedienmodul (4) wenigstens ein Staufach (9) integriert ist.

8. Tunnelverkleidung nach einem der vorhergehenden Ansprüche, **dadurch gekennzeichnet, dass** der hintere Abschluss der Tunnelverkleidung (1) durch eine Abschlussblende (11) gebildet wird.
